# EUROPÄISCHE PATENTSCHRIFT

(11) **EP 0 817 807 B1**
(45) Veröffentlichungstag und Bekanntmachung des Hinweises auf die Patenterteilung: **09.09.1998**
(21) Anmeldenummer: 96911974.2
(22) Anmeldetag: 29.03.1996
(51) Int. Cl.: C08G 12/40, C04B 24/22

(54) **KONDENSATIONSPRODUKTE AUF BASIS VON AMINO-S-TRIAZINEN UND DEREN VERWENDUNG**
CONDENSATION PRODUCTS BASED ON AMINO-S-TRIAZINES AND THE USE OF THE SAID PRODUCTS
PRODUITS DE CONDENSATION A BASE D'AMINO-S-TRIAZINES ET LEUR EMPLOI

(30) Priorität: 31.03.1995 DE 19511925
(43) Veröffentlichungstag der Anmeldung: 14.01.1998
(73) Patentinhaber: SKW Trostberg Aktiengesellschaft, 83308 Trostberg (DE)
(72) Erfinder: WEICHMANN, Josef, D-84568 Pleiskirchen (DE); STADLER, Aloisia, D-83342 Tacherting (DE); KERN, Alfred, D-84558 Kirchweidach (DE)
(74) Vertreter: Huber, Bernhard, Dipl.-Chem.
(86) Internationale Anmeldenummer: EP9601403
(87) Internationale Veröffentlichungsnummer: WO9630423

(56) Entgegenhaltungen:
- EP-A- 0 336 165
- FR-A- 2 197 055
- US-A- 2 730 516
- CHEMICAL ABSTRACTS, vol. 94, no. 12, 23.März 1981 Columbus, Ohio, US; abstract no. 89169y, "Melamine formaldehyde resin for concrete." Seite 332; XP002009429 & CS,A,181 905 (SLANICKA,STEFAN ET ALL.) 15.Februar 1980

## Beschreibung

Die vorliegende Erfindung betrifft Kondensationsprodukte auf Basis von Amino-s-triazinen mit wenigstens zwei Aminogruppen und Formaldehyd mit einem relativ hohen Gehalt an Sulfonsäuregruppen und einem geringen Gehalt an Formiat sowie deren Verwendung als Zusatzmittel für anorganische Bindemittel, insbesondere Zement.

Es ist bekannt, daß die Fließfähigkeit von Baustoffen auf Basis anorganischer Bindemittel wie Zement, Gips und Anhydrit durch Dispergiermittel erhöht werden kann. Durch die verbesserte Fließfähigkeit kann ein niedrigeres Wasser/Bindemittel-Verhältnis eingehalten werden, wodurch höhere Festigkeiten des erhärteten Baumaterials resultieren. Technische Bedeutung haben hierbei vor allem Umsetzungsprodukte auf Basis Melamin, Formaldehyd und Alkalisulfiten erlangt.

So werden in der DE-AS 23 59 291 Kondensationsprodukte aus Melamin, Formaldehyd und einem Alkalisulfit im Molverhältnis 1 : 2,8 bis 2,3 : 0,9 bis 1,1 beschrieben. Nach herkömmlicher Vorstellung, wie sie bspw. in der EP-A 59 353 beschrieben ist, reagieren hierbei Melamin und Alkalisulfit äquimolar unter Absättigung einer der drei Aminogruppen des Melamins zu sulfonierten Methylolverbindungen, die anschließend durch Abreaktion der beiden verbliebenen Aminogruppen des Melamins zu linearen Polykondensaten weiterkondensiert werden.

Zur Erzielung geeigneter Molekulargewichtsverteilungen, wie sie für die erstrebte Dispergierwirkung notwendig sind, ist deshalb die Einhaltung eines weitgehend äquimolaren Molverhältnisses von Melamin und Alkalisulfit von Bedeutung, wie es in der oben genannten DE-AS 23 59 291 durch das Verhältnis von Melamin zu Sulfit von 1 : 0,9 bis 1,1 gefordert wird.

Nur geringfügig erweitert wird dieser Bereich gemäß der japanischen Offenlegungsschrift 57/100 959, in der molare Verhältnisse von Melamin : Formaldehyd : Sulfit von 1,0 : 2,7 bis 3,3 : 0,9 bis 1,2 offenbart werden. Da die Alkalisulfite das mit Abstand billigste Ausgangsmaterial zur Herstellung der Sulfonsäuregruppen enthaltenden Melamin-Formaldehyd-Harze darstellen, wurden später auch Produkte beschrieben, bei denen über das ideale 1 : 1-Molverhältnis von Melamin : Sulfit hinausgegangen wurde.

So sind bspw. in dem südafrikanischen Patent 78/2022 Kondensationsprodukte auf Basis Melamin, Formaldehyd und einem Alkalisulfit mit den Molverhältnissen 1 : 2,5 bis 4,0 : 0,2 bis 1,5 beschrieben. Ebenfalls bis zum Grenzmolverhältnis Melamin : Sulfit von 1 : 1,5 wird gemäß der EP-A 336 165 gegangen, die ebenfalls Sulfonsäuregruppen enthaltende Kondensationsprodukte auf Basis von Amino-s-triazinen mit mindestens zwei Aminogruppen und Formaldehyd beschreibt. Allen diesen Druckschriften ist gemeinsam, daß entsprechend deren Offenbarung nicht über das Molverhältnis von Melamin : Sulfit 1 : 1,5 hinausgegangen wird.

CS-A-181 905 (s. Chemical Abstracts, vol. 94, no.12, 89 169y) beschreibt Kondensate aus einem Mol Melamin, 2 bis 6 Molen Formaldehyd und 0,5 bis 2 Molen Sulfit. Im einzigen Beispiel werden Formaldehyd und Sulfit im Molverhältnis 6,6:1 eingezetzt.

Fließmittel für anorganische Baustoffmischungen sind heute typische Commodity-Produkte und stehen aufgrund der billigeren Konkurrenz durch Sulfonsäuregruppen enthaltende Naphthalin-Formaldehyd-Kondensationsprodukte bzw. Lignosulfonate unter starkem Preisdruck. Eine weitere Verbesserung des Preis/Leistungsverhältnisses der Melamin-Formaldehyd-Sulfit-Kondensationsprodukte könnte durch Erhöhung des Sulfonatgruppengehalts erzielt werden, da Sulfit die billigste Komponente bei der Herstellung darstellt. Die gewünschte Erhöhung ist aufgrund der oben angegebenen Grenzmolarverhältnisse, insbesondere von Melamin zu Sulfit, aber limitiert.

Es wurde entsprechend der EP-A 6 135 auch vorgeschlagen, das relativ teure Melamin durch billigeren Harnstoff in den Molverhältnissen von Melamin : Harnstoff 0,75 : 0,25 bis 0,35 : 0,7 zu ersetzen, doch weisen diese Harze den Nachteil auf, daß unter den stark alkalischen Bedingungen in zementhaltigen Massen eine Spaltung der Kondensationsprodukte bis hin zur Emission von Ammoniak aus Harnstoff auftritt. Aus Umwelt- und Verbraucherschutzgründen sind solche Produkte deshalb heute nicht mehr verantwortbar.

Dagegen wäre eine weitere Erhöhung der Anzahl der Sulfonsäuregruppen im Kondensationsprodukt toxikologisch unbedenklich, doch konnte dies bisher nicht realisiert werden. Außerdem weisen die Sulfonsäuregruppen enthaltenden Melamin-Formaldehyd-Kondensationsprodukte entsprechend dem Stand der Technik einen relativ hohen Gehalt an Formiat auf. Nach den deutschen Richtlinien für die Erteilung von Zulassungen für Betonzusatzmittel (Fassung Juni 1993, Abschnitt 6, Punkt 2) werden bestimmte chemische Bestandteile in Betonzusatzmitteln begrenzt. Insbesondere dürfen Betonzusatzmittel keine Stoffe in solchen Mengen enthalten, die den Beton oder den Korrosionsschutz der Bewehrung (Beton oder Spannstahl) beeinträchtigen können. In diesem Zusammenhang werden Chloride, Thiocyanate, Nitrite, Nitrate und Formiate aufgeführt.

Der vorliegenden Erfindung liegt daher die Aufgabe zugrunde, Kondensationsprodukte auf Basis von Amino-s-triazinen mit wenigstens zwei Aminogruppen und Formaldehyd mit einem relativ hohen Gehalt an Sulfonsäuregruppen und einem geringen Gehalt an Formiat zur Verfügung zu stellen, die mit einfachen technischen Mitteln herstellbar und sowohl in ökonomischer als auch ökologischer Hinsicht vertretbar sind.

Diese Aufgabe wird erfindungsgemäß durch die Bereitstellung von Kondensationsprodukten gemäß Anspruch 1 auf Basis von Amino-s-triazinen mit wenigstens zwei Aminogruppen, Formaldehyd und Sulfit gelöst, welche dadurch gekennzeichnet sind, daß das Molverhältnis Amino-s-triazin : Formaldehyd : Sulfit 1 : 2,5 bis 6,0 : 1,51 bis 2,0 beträgt. Der Formiatgehalt beträgt < 0,3 Gew.-%. Diese Kondensationsprodukte können erfindungsgemäß dadurch hergestellt werden, daß man
a) Amino-s-triazin, Formaldehyd und ein Sulfit im Molverhältnis 1 : 2,5 bis 6,0 : 1,51 bis 2,0, wobei das Molverhältnis Formaldehyd zu Sulfit 1,8 bis 2,4:1 beträgt, in wäßriger Lösung bei einer Temperatur von 60 bis 90°C und einem pH-Wert zwischen 9,0 und 13,0 so lange erhitzt, bis das Sulfit nicht mehr nachweisbar ist,
b) danach bei einem pH-Wert zwischen 3,0 und 6,5 und einer Temperatur von 60 bis 80°C die Kondensation so lange fortsetzt, bis das Kondensationsprodukt bei 80°C eine Viskosität von 5 bis 50 mm²/s aufweist und
c) anschließend das Kondensationsprodukt auf einen pH-Wert von 7,5 bis 12,0 einstellt oder eine thermische Nachbehandlung einem pH-Wert von ≥ 10 und einer Temperatur von 60 bis 100°C durchführt.

Vorzugsweise beträgt das Molverhältnis Amino-s-triazin : Formaldehyd 1 : 2,5 bis 4,0. Der bevorzugte Bereich Amino-s-triazin : Sulfit ist 1 : 1,51 bis 1,80.

Es hat sich nämlich überraschenderweise gezeigt, daß man auf diese Weise Kondensationsprodukte mit hervorragender verflüssigender Wirkung und hohem Feststoffgehalt herstellen kann, die eine ausgezeichnete Lagerstabilität aufweisen.

Als weiterer überraschender Effekt muß die Tatsache gewertet werden, daß die erfindungsgemäßen Kondensationsprodukte einen relativ geringen Gehalt an Formiat aufweisen, das während der alkalischen Kondensationsreaktion durch Cannizzaro-Reaktion aus Formaldehyd entsteht.

In der ersten Reaktionsstufe a) werden Amino-s-triazin, Formaldehyd und ein Sulfit in wäßriger Lösung bei einer Temperatur von 60 bis 90°C und einem pH-Wert zwischen 9,0 und 13,0 so lange vorkondensiert, bis das Sulfit nicht mehr nachweisbar ist. Die pH-Wert-Einstellung wird mit den üblichen alkalisch reagierenden Verbindungen, vorzugsweise Natronlauge, vorgenommen.

Als Amino-s-triazin werden bevorzugt Melamin, aber auch Guanamine, wie z. B. Benzo- oder Acetoguanamin, eingesetzt.

Es ist im Rahmen der vorliegenden Erfindung auch möglich, eine Mischung von Amino-s-triazin mit anderen Aminoplastbildnern zu verwenden, wobei bis zu 50 Mol-% der Mischung aus einem anderen Aminoplastbildner, wie z.B. Harnstoff, Thioharnstoff, Dicyandiamid oder Guanidin(-Salze), bestehen können. Für den Fall, daß ein Teil des Amino-s-triazins durch andere Aminoplastbildner ersetzt wurde, gehen diese in das Molverhältnis mit ein.

Formaldehyd wird bevorzugt in Form seiner 30 %igen wäßrigen Lösung (Formalin) eingesetzt. Es kann aber auch jede andere Form, wie z.B. Paraformaldehyd, verwendet werden.

Als Sulfitderivate finden bevorzugt die Bisulfite oder Pyrosulfite Verwendung. Geeignet sind jedoch auch die entsprechenden Alkali- oder Erdalkalisulfite.

Erfindungswesentlich ist das Molverhältnis von Amino-s-triazin, Formaldehyd und Alkalisulfit im Betrag von 1 : 3,0 bis 6,0 : 1,51 bis 2,0. Nur damit lassen sich Kondensationsprodukte mit einem relativ hohen Gehalt an Sulfonsäuregruppen und einem niedrigen Gehalt an Formiat herstellen. Vorzugsweise beträgt das Molverhältnis Amino-s-triazin zu Formaldehyd zu Sulfit 1 : 3,0 bis 4,0 : 1,51 bis 1,80. Das Verhältnis von Formaldehyd : Sulfit beträgt zwischen 1,8 und 2,4 : 1. Da im Rahmen des erfindungsgemäßen Verfahrens die eingesetzten Ausgangsstoffe praktisch vollständig in das erhaltene Kondensationsprodukt eingebaut werden, entspricht dessen molare Zusammensetzung dem Molverhältnis der Ausgangsstoffe. Gemäß einer bevorzugten Ausführungsform wird die Konzentration der Ausgangskomponenten so eingestellt, daß der Feststoffgehalt des Endproduktes 30 bis 60 Gew.-%, vorzugsweise 40 bis 50 Gew.-%, beträgt.

Im Anschluß an die alkalische Vorkondensation (Reaktionsstufe a)) wird in der Reaktionsstufe b) im sauren pH-Bereich weiterkondensiert, und zwar bei einem pH-Wert zwischen 3,0 und 6,5 sowie einer Temperatur von 60 bis 80°C. Die pH-Wert-Einstellung erfolgt hierbei mit den üblichen sauer reagierenden Verbindungen oder Salzen, insbesondere Mineralsäuren. Aus Kostengründen ist Schwefelsäure hierbei besonders bevorzugt.

Die saure Kondensationsreaktion ist dann beendet, wenn die Viskosität der wäßrigen Lösung bei 80°C Werte zwischen 5 und 50 mm²/s, vorzugsweise 5 bis 25 mm²/s erreicht hat. Die Messung der Viskosität erfolgt hierbei mit den üblichen Viskositätsmeßgeräten, z.B. einem Ubbelohde-Viskosimeter. Zum Abbruch der sauren Polykondensationsreaktion wird gemäß der Reaktionsstufe c) auf einen pH-Wert von 7,5 bis 12,0 eingestellt, was wiederum mit den üblichen alkalisch reagierenden Verbindungen, vorzugsweise Natronlauge, erfolgen kann.

Es ist im Rahmen der vorliegenden Erfindung auch möglich, anstelle der pH-Wert-Umstellung eine thermische Nachbehandlung der Kondensationsprodukte im alkalischen Bereich bei einem pH-Wert ≥ 10 und bei einer Temperatur von 60 bis 100°C durchzuführen. Durch diesen Nachbehandlungsschritt läßt sich der Gehalt an freiem Formaldehyd, der normalerweise zwischen ca. 0,2 und 0,3 Gew.-% liegt, noch weiter reduzieren und je nach Zeitdauer der Behandlung (in der Regel 0,5 bis 3 Stunden) auf < 0,2 Gew.-%, insbesondere < 0,1 Gew.-% einstellen, wobei jedoch der Formiatgehalt geringfügig ansteigen kann.

Die auf diese Weise hergestellten Kondensationsprodukte weisen einen relativ geringen Formiat-Gehalt von < 0,3 Gew.-% auf und sind auch bei hoher Feststoffkonzentration lagerstabil, d. h. sie können problemlos mindestens ein Jahr bei Raumtemperatur gelagert werden. Aufgrund ihrer guten Verflüssigungswirkung eignen sich die erfindungsgemäßen Kondensationsprodukte hervorragend als Zusatzmittel für anorganische Bindemittelsuspensionen, insbesondere auf Basis von Zement, Kalk und Gips, wobei sie in einer Menge von 0,1 bis 10 Gew.-%, vorzugsweise 0,1 bis 5 Gew.-%, bezogen auf den Bindemittelgehalt der entsprechenden hydraulisch erhärteten Baustoffmischungen (wie z. B. Mörtel, Beton oder Gips), eingesetzt werden.

Die nachfolgenden Beispiele sollen die Erfindung näher veranschaulichen.

### Beispiele

### Allgemeine Vorschrift für die Herstellungsbeispiele 1 bis 5

In einem 2 l Dreihalskolben mit Rührer, Rückflußkühler und Tropftrichter werden Formaldehyd sowie Wasser vorgelegt und mit Natronlauge I alkalisch gestellt. Anschließend wird Melamin portionsweise eingetragen und danach Natronlauge II zugefügt. Im Falle der teilweisen Substitution des Melamins durch andere Aminoplastbildner werden diese nach dem Melamin eingetragen.

Anschließend wird das Sulfit ebenfalls portionsweise in die Reaktionslösung eingetragen und diese dann auf 70 bis 80°C aufgeheizt. Sobald Sulfit nicht mehr nachweisbar ist, wird die Lösung durch Zugabe der Schwefelsäure sauer gestellt. Man kondensiert bei 80°C, bis die in Tabelle 2 angegebene Viskosität erreicht wird. Anschließend wird mit Natronlauge III auf pH-Werte zwischen 7,5 und 12,0 eingestellt (Beispiele 1 bis 4). Gemäß Beispiel 5 wurde nach Abschluß der Kondensationsreaktion noch eine thermische Nachbehandlung bei 80°C und einem pH-Wert > 10,0 (durch Zugabe von Natronlauge III) durchgeführt (Zeitdauer: Min.), wobei der freie Formaldehydgehalt auf ca. 0,13 Gew.-% gesenkt wurde.

**Tabelle 1:**

| (Molverhältnisse) | | | |
|---|---|---|---|
| Beispiel | Melamin | Formaldehyd | Natriumhydrogensulfit |
| 1 | 1 | 3,33 | 1,53 |
| 2 | 1 | 3,60 | 1,70 |
| 3 | 1 | 3,70 | 1,90 |
| 4 | 1 | 3,80 | 2,00 |
| 5 | 1 | 3,33 | 1,53 |
| 6 | 1 | 3,00 | 1,00 |
| (Vergleichsbeispiel) | | | |

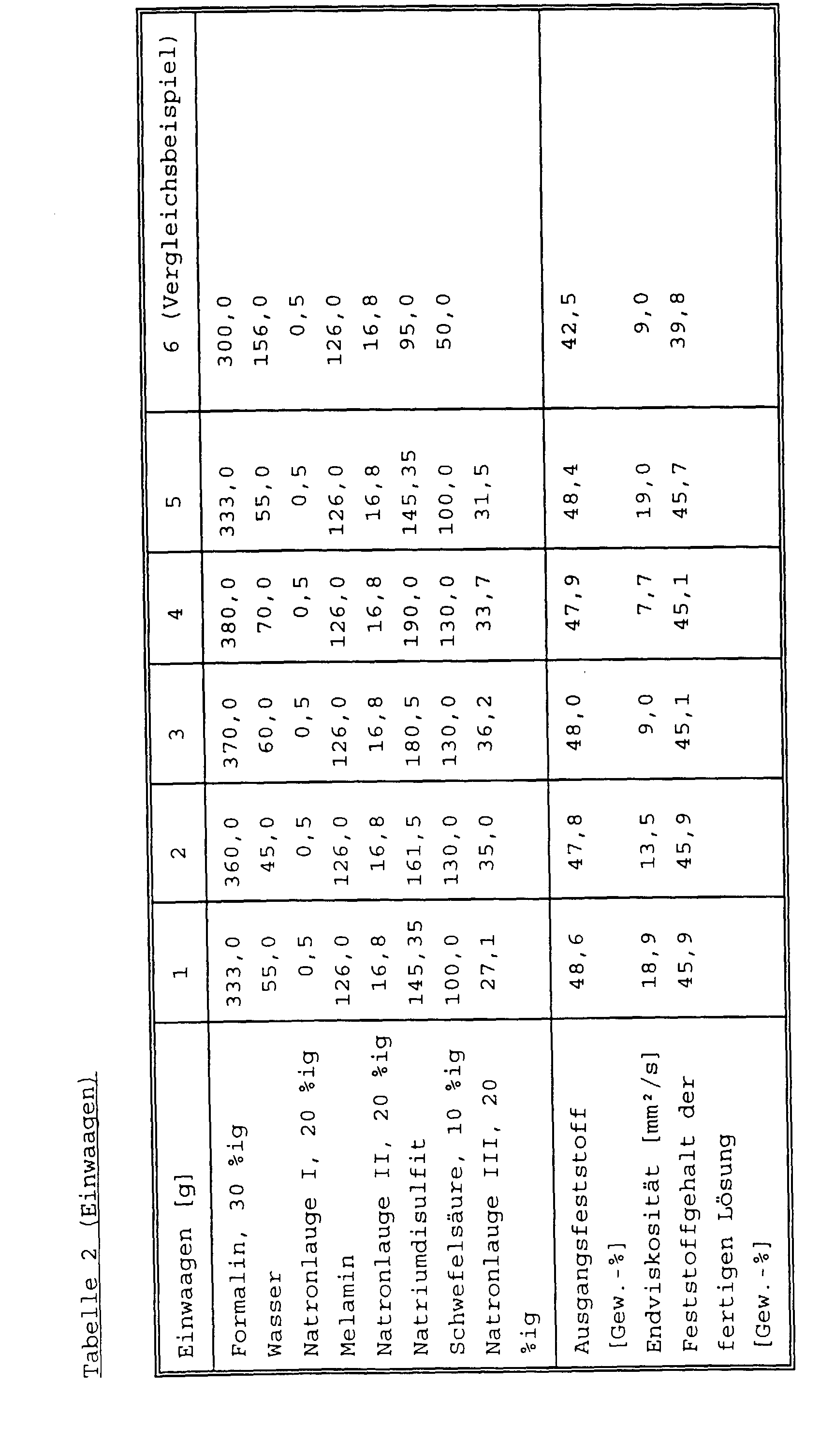

### Austestung:

Der Nachweis der verflüssigenden Eigenschaften der erfindungsgemäßen Kondensate wurde in Anlehnung an DIN 1048 in Betonmischungen geführt. Dazu wurden folgende Betonmischungen hergestellt:
14,2 kg Sand 0 bis 4 mm
2,3 kg Sand 4 bis 8 mm
7,0 kg Kiesel 8 bis 16 mm
9,5 kg Kiesel 16 his 32 mm
5,3 kg PZ 35 F
und das Ausbreitmaß 10 bzw. 40 Minuten nach Mischbeginn bestimmt.

Im Anschluß an die Messung der Ausbreitmaße wurden Prüfkörper mit 15 x 15 x 15 cm Kantenlänge hergestellt und die Druckfestigkeit nach 24 Stunden sowie die Rohdichte bestimmt. Die Ergebnisse sind in Tabelle 3 zusammengefaßt.

**Tabelle 3**

| (Beton: Ausbreitmaß) | | | | | | |
|---|---|---|---|---|---|---|
| Zusatzmittel nach Beispiel | Dosierung [Gew.-%] bezogen auf Zement | W/Z | Ausbreitmaß [cm] a₁₀ a₄₀ | | 1 d-Druckfestigkeit [N/mm²] | Rohdichte [kg/dm³ ] |
| 1 | 0,46 | 0,51 | 55,2 | 46,0 | 12,5 | 2,49 |
| 2 | 0,46 | 0,51 | 52,0 | 42,5 | 13,6 | 2,48 |
| 3 | 0,46 | 0,51 | 47,5 | 39,5 | 13,5 | 2,47 |
| 4 | 0,46 | 0,51 | 48,0 | 40,5 | 13,2 | 2,48 |
| 5 | 0,46 | 0,51 | 53,0 | 42,5 | 12,7 | 2,49 |
| 6 | 0,46 | 0,51 | 52,2 | 42,5 | 13,5 | 2,47 |
| (Vergleichsbeispiel) Blindwert | - | | 36,0 | - | - | - |

### Zementfließmaß

Zur Durchführung des Zementfließmaßes wurden 300 g Zement und 150 g Wasser (W/Z = 0,5) verwendet. Der Zement wurde innerhalb einer Minute in das Wasser eingestreut und eine weitere Minute in Ruhe belassen. Nach intensiver manueller Durchmischung von 2 Minuten wurde der Zementleim anschließend in einen auf einer trockenen, fettfreien, ebenen Glasplatte stehenden Vicatring (Innenmaß: D = 75 mm, d = 65 mm, H = 40 mm) randgleich eingegossen. Der Vicatring wurde sofort nach dem Einfüllen 2 cm hochgehoben und ca. 5 Sek. über dem auseinanderfließenden Brei gehalten. Der Durchmesser des Zementbreies wurde an zwei senkrecht zueinander liegenden Achsen bestimmt. Das arithmethische Mittel dieser beiden Meßwerte ist das Fließmaß in cm.

**Tabelle 4**

| (Zementleim: Fließmaße) | | |
|---|---|---|
| Zusatzmittel nach Beispiel | Dosierung [Gew.-%] bezogen auf Zement | Fließmaß [cm] |
| 1 | 0,3 | 23,5 |
| 2 | 0,3 | 24,6 |
| 3 | 0,3 | 21,8 |
| 4 | 0,3 | 22,6 |
| 5 | 0,3 | 23,6 |
| 6 (Vergleichsbeispiel) | 0,3 | 24,4 |
| Blindwert | - | 18,0 |

### Formiatgehalt

Der Formiatgehalt der erfindungsgemäßen Kondensationsprodukte wurde in wäßriger Lösung mittels Ionenchromatographie bestimmt.

### Geräte

- Ionenchromatograph mit Leitfähigkeitsdetektor und Suppressor, Dionex 2110
- Vorsäule AG 3, Dionex
- Trennsäule AS 3, Dionex
- Aufgabenschleife 50 µl
- Membranfilter 0,45 µm, Sartorius

### Eluent

0,0015 Mol Natriumhydrogencarbonat/1 l Wasser, dest., entgast

### Durchflußrate

2,3 ml/min

### Durchführung

Die Gehaltsbestimmung erfolgte mittels einer Kalibrierkurve, erstellt durch Formiat-Standardlösungen. Die Probelösungen wurden jeweils zweimal injiziert, wobei die Standardlösungen vor und nach der Probenserie aufgegeben wurden. Zur Gehaltsbestimmung wurden jeweils die Mittelwerte verwendet.

**Tabelle 5**

| (Formiatgehalt) | |
|---|---|
| Beispiel | Formiat-Gehalt [Gew.-%] |
| 1 | 0,22 |
| 2 | 0,29 |
| 3 | 0,16 |
| 4 | 0,24 |
| 5 | 0,25 |
| 6 (Vergleichsbeispiel) | 0,45 |

## Patentansprüche

1. Kondensationsprodukt auf Basis von Amino-s-triazinen mit wenigstens zwei Aminogruppen, Formaldehyd und Sulfit,
**dadurch gekennzeichnet,**
daß das Molverhältnis von Amino-s-triazin zu Formaldehyd zu Sulfit 1: 2,5 bis 6,0 : 1,51 bis 2,0 und das Molverhältnis Formaldehyd : Sulfit 1,8 bis 2,4 : 1 beträgt und der Formiatgehalt unter 0,3 Gew.-% liegt, wobei bis zu 50 Mol-% des Amino-s-triazins durch andere Aminoplastbildner ausgewählt aus der Gruppe Harnstoff, Thioharnstoff, Dicyandiamid oder Guanidin-(Salze) ersetzt sein können.

2. Kondensationsprodukt nach Anspruch 1,
**dadurch gekennzeichnet,**
daß es als Amino-s-triazin Melamin enthält.

3. Kondensationsprodukt nach einem der vorhergehenden Ansprüche,
**dadurch gekennzeichnet,**
daß das Molverhältnis Amino-s-triazin : Formaldehyd 1 : 2,5 bis 4,0 beträgt.

4. Kondensationsprodukt nach einem der vorhergehenden Ansprüche,
**dadurch gekennzeichnet,**
daß das Molverhältnis Amino-s-triazin : Sulfit 1 : 1,51 bis 1,8 beträgt.

5. Kondensationsprodukt nach einem der vorhergehenden Ansprüche in Form einer wäßrigen Lösung mit einem Feststoffgehalt von 30 bis 60 Gew.-%.

6. Kondensationsprodukt nach Anspruch 5,
**dadurch gekennzeichnet,**
daß der Feststoffgehalt 40 bis 50 Gew.-% beträgt.

7. Kondensationsprodukt nach einem der Ansprüche 5 oder 6,
**gekennzeichnet durch** eine Viskosität von 5 bis 50 mm²/s bei 80°C.

8. Verfahren zur Herstellung eines Kondensationsproduktes nach einem der Ansprüche 1 bis 7,
**dadurch gekennzeichnet,**
daß man
a) Amino-s-triazin, Formaldehyd und ein Sulfit im Molverhältnis 1 : 2,5 bis 6,0 : 1,51 bis 2,0, wobei das Molverhältnis Formaldehyd zu Sulfit 1,8 bis 2,4 : 1 beträgt, in wäßriger Lösung bei einer Temperatur von 60 bis 90°C und einem pH-Wert zwischen 9,0 und 13,0 so lange erhitzt, bis das Sulfit nicht mehr nachweisbar ist,
b) danach bei einem pH-Wert zwischen 3,0 und 6,5 und einer Temperatur von 60 bis 80°C die Kondensation so lange fortsetzt, bis das Kondensationsprodukt bei 80°C eine Viskosität von 5 bis 50 mm²/s aufweist und
c) anschließend das Kondensationsprodukt auf einen pH-Wert von 7,5 bis 12,0 einstellt oder eine thermische Nachbehandlung bei einem pH-Wert ≥ 10,0 und einer Temperatur 60 bis 100°C durchführt.

9. Verwendung des Kondensationsprodukts nach den Ansprüchen 1 bis 7 als Zusatzmittel für anorganische Bindemittel, insbesondere Zement, in einer Menge von 0,1 bis 10 Gew.-% bezogen auf die Menge des eingesetzten Bindemittels.

10. Verwendung des Kondensationsprodukts nach Anspruch 9,
**dadurch gekennzeichnet,**
daß sie in einer Menge von 0,1 bis 5 Gew.-% bezogen auf den Bindemittelgehalt eingesetzt werden.

## Claims

1. Condensation product based on amino-s-triazines with at least two amino groups, formaldehyde and sulphite,
**wherein**
the molar ratio of amino-s-triazine to formaldehyde to sulphite is 1 : 2.5 to 6.0 : 1.51 to 2.0 and the molar ratio of formaldehyde : sulphite is 1.8 to 2.4 : 1 and the formate content is less than 0.3 % by weight in which up to 50 mol % of amino-s-triazine can be replaced by another aminoplast former selected from the group comprising urea, thioruea, dicyandiamide or guanidine (salts).

2. Condensation product as claimed in claim 1,
**wherein**
it contains melamine as the amino-s-triazine.

3. Condensation product as claimed in one of the previous claims,
**wherein**
the molar ratio of amino-s-triazine : formaldehyde is 1 : 2.5 to 4.0.

4. Condensation product as claimed in one of the previous claims,
**wherein**
the molar ratio of amino-s-triazine : sulphite is 1 : 1.51 to 1.8.

5. Condensation product as claimed in one of the previous claims in the form of an aqueous solution with a solids content of 30 to 60 % by weight.

6. Condensation product as claimed in claim 5,
**wherein**
the solids content is 40 to 50 % by weight.

7. Condensation product as claimed in one of the claims 5 or 6,
**characterized by**
a viscosity of 5 to 50 mm²/s at 80°C.

8. Process for the production of a condensation product as claimed in one of the claims 1 to 7,
**wherein**
a) amino-s-triazine, formaldehyde and a sulphite in a molar ratio of 1 : 2.5 to 6.0 : 1.51 to 2.0, the molar ratio of formaldehyde to sulphite being 1.8 to 2.4 : 1, are heated in an aqueous solution at a temperature of 60 to 90°C and at a pH value between 9.0 and 13.0 until the sulphite can no longer be detected,
b) afterwards the condensation is continued at a pH value between 3.0 and 6.5 and a temperature of 60 to 80°C until the condensation product has a viscosity of 5 to 50 mm²/s at 80°C and
c) subsequently the condensation product is adjusted to a pH value of 7.5 to 12.0 or a thermal after-treatment is carried out at a pH value of > 10 and a temperature of 60 to 100°C.

9. Use of a condensation product as claimed in claims 1 to 7 as additives for inorganic binding agents, in particular cement, in an amount of 0.1 to 10 % by weight in relation to the amount of binding agent used.

10. Use of the condensation product as claimed in claim 9, **wherein**
it is used in an amount of 0.1 to 5 % by weight in relation to the content of binding agent.

## Revendications

1. Produit de condensation à base d'amino-s-triazines ayant au moins 2 groupes amino, de formaldéhyde et de sulfite, caractérisé en ce que le rapport molaire de l'amino-s-triazine au formaldéhyde et au sulfite est de 1 : 2,5 à 6,0 : 1,51 à 2,0 et le rapport molaire du formaldéhyde au sulfite est de 1,8 à 2,4 : 1, et en ce que la teneur en formate est inférieure à 0,3 % en masse, l'amino-s-triazine pouvant être remplacée en une proportion allant jusqu'à 50 % en mol par d'autres produits formant des aminoplastes choisis dans le groupe constitué par l'urée, la thiourée, le dicyandiamide et la guanidine (et ses sels).

2. Produit de condensation selon la revendication 1, caractérisé en ce qu'il contient de la mélamine comme amino-s-triazine.

3. Produit de condensation selon l'une des revendications précédentes, caractérisé en ce que le rapport molaire de l'amino-s-triazine au formaldéhyde est de 1 : 2,5 à 4,0.

4. Produit de condensation selon l'une des revendications précédentes, caractérisé en ce que le rapport molaire de l'amino-s-triazine au sulfite est de 1 : 1,51 à 1,8.

5. Produit de condensation selon l'une des revendications précédentes, sous forme d'une solution aqueuse ayant une teneur en matière solide de 30 à 60 % en masse.

6. Produit de condensation selon la revendication 5, caractérisé en ce que la teneur en matière solide est de 40 à 50 % en masse.

7. Produit de condensation selon l'une des revendications 5 ou 6, caractérisé par une viscosité de 5 à 50 mm²/s à 80°C.

8. Procédé de préparation d'un produit de condensation selon l'une des revendications 1 à 7, caractérisé en ce que
a) on chauffe de l'amino-s-triazine, du formaldéhyde et un sulfite en un rapport molaire de 1 : 2,5 à 6,0 : 1,51 à 2,0, le rapport molaire du formaldéhyde au sulfite étant de 1,8 à 2,4 : 1, en solution aqueuse, à une température de 60 à 90°C et à un pH compris entre 9,0 et 13,0, jusqu'à ce que l'on ne décèle plus de sulfite,
b) on poursuit ensuite la condensation à un pH compris entre 3,0 et 6,5 et à une température de 60 à 80°C jusqu'à ce que le produit de condensation ait une viscosité de 5 à 50 mm²/s à 80°C, et
c) on amène ensuite le produit de condensation à un pH de 7,5 à 12,0 ou on effectue un post-traitement thermique à un pH ≥ 10,0 et à une température de 60 à 100°C.

9. Utilisation du produit de condensation selon les revendications 1 à 7 comme additif pour des liants inorganiques, en particulier un ciment, en une quantité de 0,1 à 10 % en masse par rapport à la quantité de liant utilisé.

10. Utilisation du produit de condensation selon la revendication 9, caractérisée en ce qu'on l'utilise en une quantité de 0,1 à 5 % en masse par rapport à la teneur en liant.
